# EUROPEAN PATENT SPECIFICATION

(11) **EP 2 718 772 B1**
(45) Date of publication and mention of the grant of the patent: **25.07.2018**
(21) Application number: 12740675.9
(22) Date of filing: 07.06.2012
(51) Int. Cl.: G05B 15/02, D06F 33/02

(54) **HOUSEHOLD APPLIANCE WITH STAND-BY WAKE-UP SYSTEM**
HAUSHALTSGERÄT MIT STANDBY-WECKSYSTEM
APPAREIL ÉLECTROMÉNAGER COMPORTANT UN SYSTÈME DE SORTIE DE L'ÉTAT D'ATTENTE

(30) Priority: 09.06.2011 IT TO20110511
(43) Date of publication of application: 16.04.2014
(73) Proprietor: Whirlpool EMEA S.p.A., 20016 Pero (MI) (IT)
(72) Inventor: OTTAVIANI, Gianpiero, 60030 Monte Roberto (AN) (IT); POSSANZA, Mauro, 60044 Fabriano (AN) (IT)
(74) Representative: Camolese, Marco
(86) International application number: PCT/IB2012/052878
(87) International publication number: WO 2012/168895

(56) References cited:
- EP-A2- 1 134 905
- DE-C1- 19 809 114
- US-A1- 2011 062 794

## Description

### [TECHNICAL FIELD]

The present invention relates to the field of household appliances and of the control thereof, with reference to the control of energy consumption and stand-by adjustment.

The invention relates in particular to a household appliance comprising an electronic control unit, wherein the power supplied to the latter is controlled in a manner such as to provide a stand-by mode, in which the electronic control unit is not powered, and an operating mode, in which the electronic control unit is powered regularly.

### [PRIOR ART]

The desire to reduce the energy consumption of household appliances has led to the development of washing machines, television sets, refrigerators, dishwashers and other household appliances with increasingly sophisticated energy management.

At present, household appliances are known which can be placed into a "stand-by" state, i.e. an operating state of the household appliance in which no power is supplied to at least a part of the appliance; in particular, for example, what is excluded is the supply of power to some electronic devices, such as processors, sensors and video or luminous interfaces when it is determined that they are not needed.

In known household appliances, the exit from the stand-by state and the switching to a "full" operating mode typically occur in response to a user's action, such as pressing a button, e.g. the on/off button; the exit of the household appliance from the stand-by state is also referred to as "wake-up".

During the wake-up phase, the household appliances known in the art take considerable time to reach the fully operational state, because some time must pass before power can be supplied to the appliance's control electronics and the latter can respond to the user's commands.

However, this is uncomfortable for the user, who has to wait awhile before being allowed to operate the appliance. A particularly impatient user might repeatedly press the stand-by wake-up button, thereby causing machine errors or even an accidental return of the machine into the stand-by state.

Document US2011062794 (A1) relates to a method for switching a multimedia source and multimedia sink from an operating mode to a standby mode, and a method for switching a multimedia source and multimedia sink from a standby mode to an operating mode. According to US2011062794 (A1), the consumer device comprises two distributed boxes, such as a TV in which the display (multimedia sink) is separated from the processing unit (multimedia source) via a cable. Document US2011062794 (A1) provides for synchronizing the power states of both units, such that only the relevant parts remain active; the method is applicable on configurations where a DisplayPort link is used between a multimedia source, such as a set-top box, and a multimedia sink, such as a display. In an embodiment of US2011062794 (A1), the source and sink are configured to allow communication of standby and wake-up requests/commands when the transmitter and receiver for the auxiliary channel are powered down. In other embodiments of US2011062794 (A1), the switching to and from standby of the source is triggered by user.

Document DE19809114 (C1) relates to a safety circuit for washing machines and dishwashers, which features an additional logic circuit (LS) which is fed permanently by the ac mains and controlled by the program selector (PW), the level switch (WUS) and the leak display (LA). The circuit of DE19809114 (C1) features an additional logic circuit (LS) which is fed permanently by the ac mains and controlled by the program selector (PW), the level switch (WUS) and the leak display (LA). According to DE19809114 (C1), in the presence of preset control conditions, the logic circuit (LS) connects the process control (PS) to the current supply. According to DE19809114 (C1), the process control (PS) introduces preset connecting processes in accordance with the prevailing control conditions via components (e.g. a pump) of the appliance. Document EP1134905 (A2) relates to an electronic apparatus wherein a remote control signal received via a filter is decoded and, upon decision that the control signal is a power cutoff instruction, a controlling microcomputer outputs a filter control signal for actuating the filter to place the apparatus in a reception standby mode while the microcomputer itself is also set in its low power state. According to EP1134905 (A2), the remote control signal is composed of a fixed-width pulse and a succeeding control code, and upon detection of the fixed-width pulse, the controlling microcomputer is released from the low power state to wake up and then halts the operation of the filter.

### [OBJECTS AND BRIEF DESCRIPTION OF THE INVENTION]

It is one object of the present invention to overcome some of the above-described drawbacks of the household appliances known in the art.

In particular, it is one object of the present invention to improve the use of a household appliance, in particular by ensuring a more effective interaction between the user and a household appliance in stand-by mode, in particular when the latter is waking up from the stand-by state.

It is another object of the present invention to provide a household appliance that can be placed into an efficient stand-by mode, with lower energy consumption and without any adverse impact upon the easiness of use of the appliance.

It is a further object of the present invention to provide a household appliance which can be woken up from stand-by in an efficient manner, through robust and simple electronic systems that ensure the optimal operation of the household appliance itself.

These and other objects of the present invention are achieved through a household appliance and an electronic system incorporating the features set out in the appended claims, which are intended to be an integral part of the present description.

One idea at the basis of the present invention is to provide a household appliance comprising an electronic control unit, a power supply for said electronic control unit, and a first bistable circuit controlled by a first switch. The first switch, when activated, is adapted to switch the first bistable circuit between a first stand-by mode, in which the electronic control unit is not powered, and a second operating mode, in which the electronic control unit is powered regularly and the household appliance is woken up from stand-by. The household appliance comprises a second bistable circuit controlled by a second switch, wherein the second switch is adapted to switch the first bistable circuit between said first stand-by mode and said second operating mode in which the electronic control unit is powered regularly. The second bistable circuit also outputs a signal, caused by the activation of said second switch, to the electronic control unit in order to request the execution of a program of the household appliance; the program is a predefined or preset program.

This solution ensures greater flexibility of use of the household appliance, since it allows to optimize the wake-up phase by adapting it to the most advantageous or desirable operating conditions. In particular, the presence of two switches allows to select different ways in which the appliance can wake-up from stand-by, so that the appliance can operate in different modes according to specific requirements. The household appliance comprises an electric control node for the second bistable circuit, said node being able to have at least two voltage levels, wherein the second switch is adapted to switch the voltage levels supplied to the control node by sending a signal to the electronic control unit. By acting upon the second switch, it is thus possible to control in a simple and robust manner the operation of the electronic unit when waking up from stand-by.

Moreover, the second bistable circuit preferably comprises a reset node operationally connected to the electronic control unit and adapted to reset the second bistable circuit in order to allow for subsequent switching operations by means of the second switch. Advantageously, this allows for a cyclic stand-by wake-up operation; the entry into the first stand-by mode is caused by the control means of the household appliance also after pressing a button such as the first switch, whereas the wake-up from stand-by can be controlled by the first or the second switch, which lead to different modes of operation, thus improving the flexibility of use to advantage of the user.

Preferably, the electronic control unit comprises a microcontroller. In this manner, advantageously, it is possible to wake up the microcontroller from stand-by while at the same time sending a signal thereto; once it has woken up, the controller can start the execution of a predefined or preset program depending on the state of said signal. For example, in the case of a washing machine, this advantageously allows waking up the machine from stand-by and then automatically starting the execution of a treatment cycle by simply pressing one dedicated button.

The present invention also relates to an electronic system including a household appliance according to the invention.

Further objects and advantages of the present invention will become more apparent from the following detailed description and from the annexed drawings.

### [BRIEF DESCRIPTION OF THE DRAWINGS]

Some preferred and advantageous embodiments will now be described by way of non-limiting example with reference to the annexed drawings, wherein:
- Figure 1 shows a household appliance according to the present invention.
- Figure 2 shows a functional block diagram of the stand-by circuit of the appliance of Figure 1.

- Figure 3 shows one example of embodiment of the stand-by circuit of Figure 2. The drawings show different aspects and embodiments of the present invention and, where appropriate, similar structures, components, materials and/or elements in the various drawings are designated by the same reference numerals.

### [DETAILED DESCRIPTION OF THE INVENTION]

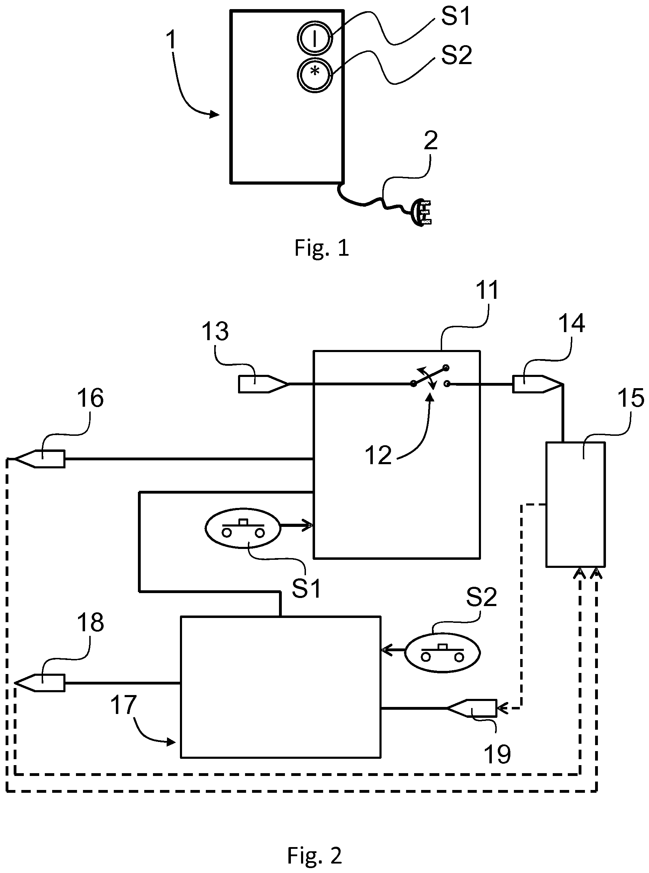

Figure 1 shows a household appliance 1 connected to a source of electric current, e.g. a 230V @ 50Hz or 110V @ 60Hz alternating mains voltage, through the power cable 2. The household appliance 1 comprises a plurality of electric and electronic components, not shown for simplicity, which require electric power to operate.

The household appliance 1 according to the present invention comprises at least one electronic control unit (not shown) for which the stand-by mode referred to in the present description has been conceived; in this stand-by mode, at least a part of the electric and electronic components of the electronic control unit are not powered. It is conceivable that in said stand-by mode other electric or electronic units of the household appliance can be placed into a stand-by mode and receive no power; at the same time, it is also conceivable that different electric or electronic units of the household appliance remain powered in order to ensure continuity of some functions of the appliance (e.g. a refrigerating cycle). Furthermore, the electronic control unit may comprise only a part of the electronic circuitry of the household appliance 1, i.e. it may comprise, for example, only a part of an electronic board, e.g. a microcontroller, or several parts of multiple interconnected electronic boards.

In general, the stand-by switch 12 may be positioned in various points of the power line of the household appliance 1, thus differently adjusting the stand-by mode thereof, provided that it is adapted to change the power state of the electronic control unit 15.

The household appliance 1 preferably comprises two switches S1 and S2, respectively associated with two buttons that can be operated by a user. When the electronic control unit of the household appliance 1 is in the stand-by state, the activation of the switch S1 only causes it to wake up. Instead, the activation of the switch S2 when the electronic control unit of the household appliance 1 is in the stand-by state causes both the appliance to wake up and a program to be subsequently started.

In one embodiment, the program executed by the household appliance 1 following the activation of the switch S2 may be a preset program, wherein the term "preset" means that said program is chosen by the user, e.g. from a list of executable programs, before the appliance enters into stand-by mode; when the appliance then wakes up, that program will be loaded and executed by the electronic control unit.

In an alternative embodiment, the program executed by the household appliance 1 following the activation of the switch S2 may be a predefined program, wherein the term "predefined" means that said program is chosen by the electronic control unit according to predefined criteria. These predefined criteria may include, by way of non-limiting example, the selection of the last program previously executed, the selection of the most used program, whether recently or in general, and the selection of a particularly suitable program, which is recognized by reading, when the machine has woken up, one or more sensors of the household appliance. In this embodiment, therefore, at stand-by wake-up the predefined program will be selected by the electronic control unit and then executed. For example, the household appliance 1 may be a washing machine, in which case pressing the switch S2 will cause the washing machine to wake up and execute a treatment cycle. Preferably, the treatment cycle can either be preset by the user or be a predefined one, in which case it is automatically selected by the control unit of the washing machine 1, e.g. because it is the cycle which is used most often by the user. Figure 2 shows a preferred example of embodiment of the present invention by means of a functional block diagram of the stand-by circuit of the household appliance 1.

The household appliance 1 comprises a bistable circuit 11, which comprises a switch 12. The switch 12 is placed in a power line, preferably carrying 12V direct current supplied by a power supply (not shown in the drawing) to the terminal 13. Downstream of the switch 12 along the power line, there is an output terminal 14, to which an electronic control unit 15 is connected. The electronic control unit 15 preferably comprises a microcontroller and a non-volatile memory adapted to permanently store information about the operation of the household appliance, even when power is off.

Therefore, when the switch 12 is opened it cuts off the power to the electronic unit 15, thereby causing it to enter into a stand-by mode in which it is inactive and draws no electric current, thus reducing the consumption of the appliance 1. It must be pointed out that the switch 12, when open, could also cut off the power to further electric or electronic devices of the household appliance 1, which are not shown in the drawing for simplicity.

Likewise, when the switch 12 is closed the electronic control unit 15 will again receive 12V direct current from the terminal 13 and therefore from the terminal 14. In this mode, the electronic control unit 15 wakes up because it is powered again.

According to the present invention, the switch 12 is closed, and hence the electronic control unit 15 wakes up, when the switch S1 of the household appliance 1 is activated. This switch S1 is preferably associated with a button that can be operated by the user, and causes the electronic control unit 15, and in general all or a part of the household appliance 1, to wake up.

The switch S1 is operationally connected to a control node 16, which is adapted to output a signal to the electronic control unit 15. For example, when the electronic control unit 15 is powered, the control node 16 is adapted to switch between two voltage levels upon activation of the switch S 1, thus being able to signal to the microcontroller that the button S1 has been pressed.

In a preferred embodiment, when the same switch S1 is pressed while the electronic control unit 15 is being powered, the household appliance will switch to the first stand-by mode previously described.

The household appliance 1 according to the present invention further comprises a bistable circuit 17 for conditioned wake-up, which is connected to the bistable circuit 11. The bistable circuit 17 is defined as a "conditioned wake-up" circuit in that it allows to wake up the household appliance 1 from stand-by and to provide a stable indication that the switch S2 has been pressed, in order to determine the consequent execution of a program by the electronic control unit 15 after it has woken up.

The switch S2 is connected to the bistable circuit 17 and is preferably associated with a button that can be operated by the user. When the switch S2 is activated, for example upon receiving a closing pulse from the associated button, it causes the power switch 12 in the bistable circuit 11 to close.

The bistable circuit 17 is also connected to a second control node 18, which is adapted to send a second signal to the electronic control unit 15 when the switch S2 is activated. In a preferred embodiment, upon activation of the switch S2 the control node 18 is adapted to switch between two voltage levels corresponding to the two stable states of the bistable circuit 17.

After the switch S2 has been activated and the electronic control unit 15 has woken up, the electronic control unit 15 itself is adapted to recognize the level of the control node 18 and to execute a program. The program may be preset or stored in a memory, or else it may be selected on the basis of predefined criteria stored in the memory itself.

In a preferred embodiment, the bistable circuit 17 further comprises a reset node 19 operationally connected to the electronic control unit 15 and adapted to receive a reset signal from it. When the electronic control unit 15 has completed the wake-up phase and has detected the activation of the button S2, it can output a reset signal to the reset node 19, which will then change the state of the bistable circuit 17 in order to allow for further switching of the stand-by circuit through the activation of the second switch S2.

In a preferred example, the switch S1 and/or the switch S2 are implemented by means of buttons that can be operated by a user. In an alternative embodiment, said switches S1 and S2 are associated with electronic activation means, e.g. a sensor.

In a preferred example, the entry of the household appliance into the stand-by state is caused by an activation of the switch S1 itself.

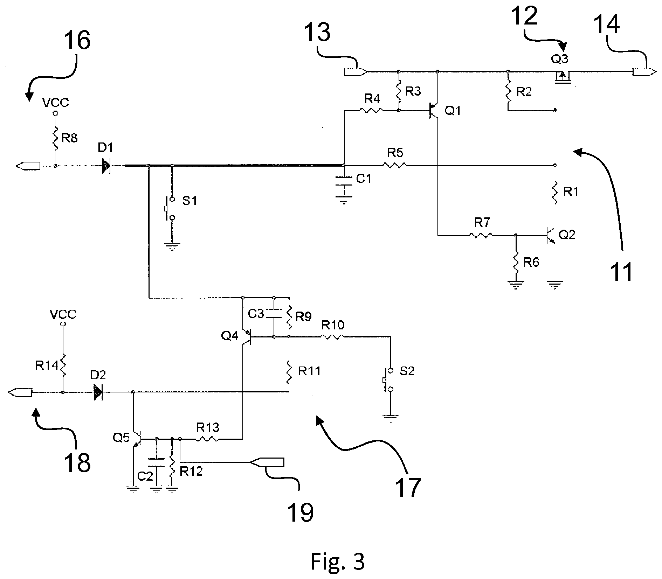

Figure 3 shows a preferred example of embodiment of the circuit of Figure 2, which comprises a first bistable circuit 11 and a second bistable circuit 17 as previously described.

The bistable circuit 11 comprises a plurality of electric and electronic components, which make it suitable for operating in a stand-by mode, in which the electronic control unit 15 (not shown in Figure 3) is not powered, and in an operating mode, in which the electronic control unit 15 is powered regularly to be woken up from said first stand-by mode.

In particular, the bistable circuit 11 comprises a transistor Q3, preferably of the MOSFET type, which is adapted to interrupt and restore the electric connection between the terminals 13 and 14 for supplying power to the electronic control unit 15, to which the "drain" terminal of the MOSFET Q3 is connected. From the supply branch of the bistable circuit, i.e. from the terminal 13 connected to the "source" of the MOSFET Q3, a connection starts which comprises a resistor R2, preferably of 10 kΩ, across which the "gate" terminal of the MOSFET Q3 is connected.

The "gate" terminal of the MOSFET Q3 is also connected, through the resistor R5, preferably of 39 kΩ, to the switch S1 and to the capacitor C1, preferably of 1 µF.

The switch S1, as will become apparent below, allows switching the bistable circuit 11. The bistable circuit 11 further comprises a PNP transistor designated Q1, whose emitter is connected to the terminal 13 and whose base is connected to the terminal 13 through a resistor R3, preferably of 10 kΩ. The base of the transistor Q1 is further connected to the capacitor C1 through the resistor R4, preferably of 47 kΩ. The collector of the transistor Q1 is further connected, through the resistor R7, preferably of 47 kΩ, to other elements of the bistable circuit.

In particular, the collector of the transistor Q1 is connected, through the resistor R7, to the base of the NPN transistor designated Q2, the base of Q2 being further connected to ground through the resistor R6, preferably of 10 kΩ. While the emitter of the transistor Q2 is connected to ground, the collector of the transistor Q2 is connected, through the resistor R1, to the "gate" of the MOSFET Q3, which is also connected to the resistors R2 and R5 as previously described.

As far as the switch S1 is concerned, in addition to being connected to the bistable circuit 11 it is also connected to the cathode of a diode D1, whose anode is connected to the control node 16 and to a direct current supply VCC, preferably having a voltage of 5 V, through a resistor R8, preferably of 10 kΩ.

Preferably, the supply VCC is derived from the voltage present at the terminal 14, and it is therefore only present when the power switch 12 is closed, i.e. when the control unit 15 is on. The control node 16 is thus adapted to supply a voltage signal having two distinct logic levels, which can be interpreted by the control means of the household appliance as an indication that the switch S1 has been activated.

The capacitor C1, which during stand-by is kept charged at substantially the potential found at the terminal 13, discharges through the switch S1 as soon as the latter is closed. The current supplied from the terminal 13 and flowing through the closed switch S1 then flows through R3 and polarizes the transistor Q1, thereby turning it on and hence also turning on Q2, which in turn holds Q1 on: the activation of the switch S1 thus causes the switching of the bistable circuit 11, which in turn activates the MOSFET Q3, which allows current to flow from the terminal 13 through the MOSFET Q3 to supply power to the terminal 14.

The switch S1 is also connected in parallel to the bistable circuit 17, which has already been described above.

The bistable circuit 17 comprises a plurality of electric and electronic components which make it adapted to operate in a stand-by mode, in which the electronic control unit 15 (not shown in Figure 3) is not powered and in which the bistable circuit 17 is adapted to activate the operation of the electronic control unit 15; furthermore, the bistable circuit 17 is also adapted to operate in an operating mode, in which the electronic control unit 15 is powered regularly to output a signal for the execution of a predefined or preset program, as previously described.

In particular, the bistable circuit 17 comprises a PNP transistor Q4 whose emitter is connected to the switch S1. The second bistable circuit 17 further comprises a resistor R9 that connects the emitter of the transistor Q4 to the base of the same transistor Q4; the resistor R9 is preferably of 22 kΩ.

In parallel to the resistor R9, the circuit comprises a capacitor C3, preferably of 0.1 µF. The capacitor C3 thus acts as an anti-noise filter to prevent any accidental switching from occurring due to electric noise affecting the circuit.

The base of the transistor Q4 is also connected to the resistor R10, preferably of 47 kΩ, which in turn is connected to the switch S2, the other end of which is connected to ground. The switch S2, as will become apparent below, allows switching the bistable circuit 17 and, as a consequence, switching the bistable circuit 11 as well.

The base of the transistor Q4 is further connected to the resistor R11. The bistable circuit 17 further comprises an NPN transistor Q5, whose collector is connected to the resistor R11.

The base of the transistor Q5 is connected, through an additional resistor R13, preferably of 47 kΩ, to the collector of the transistor Q4. The base of the transistor Q5 is also connected to ground through the resistor R12, preferably of 22 kΩ, and the filter capacitor C2, preferably of 10 µF.

The collector of the transistor Q5 is further connected to the cathode of a diode D2, whose anode is connected to the control node 18 and to a direct current supply VCC, preferably having a voltage of 5 V, through a resistor R14, preferably of 2.2 kΩ.

In a preferred example, when the switch S2 is closed a voltage of 0.5 V is applied to the control node 18, which voltage can be detected by the electronic control unit 15 as a logic level distinct from the one corresponding to a voltage of 5 V, i.e. equal to VCC, which is applied to the control node 18 when the bistable circuit 17 is reset, as will be described below.

The supply VCC is derived from the voltage present at the terminal 14, and it is therefore only present when the power switch 12 is closed, i.e. when the control unit 15 is on. The control node 18 is thus adapted to supply a voltage signal having two distinct logic levels, which can be interpreted by the control unit 15 as a command for the execution of a predefined or preset program.

The bistable circuit 17, when the switch S2 is activated, i.e. closed, turns on the transistors Q4 and Q5 in cascade through the current supplied by the terminal 13, thereby causing the bistable circuit 11 to switch; turning on Q4 and Q5 has the same effect as closing the switch S1, which causes the switching of the bistable circuit 11.

In this manner, the activation of the switch S2 causes the switching of the bistable circuit 17, which in turn is adapted to switch the bistable circuit 11 by closing the MOSFET Q3 as previously described in order to supply power to the terminal 14.

In fact, the electronic control unit 15, once it has completed its wake-up phase, is programmed for detecting at least the voltage present at the control node 18; if it detects a certain logic level of the voltage signal present at the control node 18, the electronic control unit 15 is adapted to start the execution of a predefined or preset program.

The control node 18, as previously described, is adapted to have at least two distinct voltage levels in order to output a signal, detected by the electronic control unit 15, which causes the start of a predefined or preset program as already described. Advantageously, the bistable circuit 17 further comprises a reset node 19 connected to the base of the transistor Q5 and adapted to restore the bistable circuit 17 into the conditions it was in prior to the activation of the switch S2, thereby allowing it to be operated again. In fact, when the control unit imposes an electric level equal to ground on the reset node 19, the transistor Q5 will turn off and so will the transistor Q4, thus switching the bistable circuit 17 into the configuration it was in before the activation of the switch S2.

The present invention is advantageously applicable to programmable household appliances comprising a stand-by function, and allows to reduce their power consumption and to improve their operation when one wants to wake up the household appliance.

The invention, described herein with reference to a generic household appliance, is applicable to specific typologies of household appliances, e.g. a washing machine, a dishwasher, an oven, a refrigerator, or to other programmable electronic appliances.

## Claims

1. A household appliance comprising an electronic control unit (15), power supply means (12, 13, 14) for said electronic control unit (15), a first bistable circuit (11), and a first switch (S1) connected to said first bistable circuit (11) and adapted to switch said first bistable circuit (11) between a first mode of stand-by, in which said electronic control unit (15) is not powered, and a second mode of operation, in which said electronic control unit (15) is powered to wake up from said first mode of stand-by,
**characterized in that**
said household appliance further comprises a second bistable circuit (17) connected to said first bistable circuit (11) and a second switch (S2) connected to said second bistable circuit (17), said second switch (S2) being adapted to switch said first bistable circuit (11) as a consequence of switching said second bistable circuit (17) and also adapted to switch said second bistable circuit (17) so that said second bistable circuit (17) outputs a signal to said electronic control unit (15) to cause the execution of a predefined or preset program of said household appliance, wherein said household appliance further comprises at least one control node (18) connected to said second bistable circuit (17), said control node (18) being adapted to have at least two voltage levels, wherein said second switch (S2) is adapted to switch the voltage levels of said control node (18) to supply said signal to said electronic control unit (15).

2. A household appliance according to claim 1, wherein said electronic control unit (15) comprises at least one microcontroller operationally connected to at least said control node (18) and adapted to start the execution of said predefined or preset program depending on said signal.

3. A household appliance according to claim 1 or 2, further comprising a reset node (19) connected to said second bistable circuit (17), said reset node (19) being operationally connected to said microcontroller (15) and being adapted to receive from said microcontroller (15) a reset signal adapted to reset said second bistable circuit (17) to an operating state that can be switched by said second switch (S2).

4. A household appliance according to any one of claims 1 to 3, wherein said first bistable circuit (11) comprises a plurality of transistors (Q1, Q2) adapted to be polarized by the current drawn from a power terminal (13) when said first switch (S1) closes, so as to induce the activation of a power transistor (Q3, 12) adapted to supply power (13, 14) to said electronic control unit (15).

5. A household appliance according to claim 4, further comprising a power supply adapted to receive at its input an alternating mains voltage and to output at least one direct voltage to be supplied to said electronic control unit (15), wherein said power transistor (Q3, 12) is interposed between said power supply and said electronic control unit (15).

6. A household appliance according to any one of claims 1 to 5, wherein said second bistable circuit (17) comprises a second plurality of transistors (Q4, Q5) adapted to be polarized by the current drawn from a power terminal (13) when said second switch (S2) closes, so as to induce the activation of a power transistor (Q3, 12) adapted to supply power (13, 14) to said electronic control unit (15).

7. A household appliance according to any one of claims 1 to 6, wherein said first switch (S1) and said second switch (S2) are respectively associated with a first button and a second button that can be operated by a user.

8. A household appliance according to any one of claims 1 to 7, said household appliance (1) being a washing machine, wherein said signal adapted to start the operation of said electronic control unit (15) is received from control means of said washing machine (1) for executing a treatment cycle.

9. An electronic system including a household appliance, according to any one of claims 1 to 8.

## Patentansprüche

1. Haushaltsgerät, umfassend eine elektronische Steuereinheit (15), eine Stromversorgungseinrichtung (12, 13, 14) für die elektronische Steuereinheit (15), eine erste bistabile Schaltung (11) und ein erster Schalter (S1), der mit der ersten bistabilen Schaltung (11) verbunden ist und dazu eingerichtet ist, die erste bistabile Schaltung (11) zwischen einem ersten Bereitschaftsmodus, in dem die elektronische Steuereinheit (15) nicht mit Energie versorgt wird, und einem zweiten Betriebsmodus, in dem die elektronische Steuereinheit (15) mit Energie versorgt wird, um aus dem ersten Bereitschaftsmodus aufzuwachen, umzuschalten,
**dadurch gekennzeichnet, dass**
das Haushaltsgerät zudem eine zweite bistabile Schaltung (17), die mit der ersten bistabilen Schaltung (11) verbunden ist, und einen zweiten Schalter (S2), der mit der zweiten bistabilen Schaltung (17) verbunden ist, umfasst, wobei der zweite Schalter (S2) dazu eingerichtet ist, die erste bistabile Schaltung (11) als Resultat der Umschaltung der zweiten bistabilen Schaltung (17) umzuschalten und auch dazu eingerichtet ist, die zweite bistabile Schaltung (17) umzuschalten, so dass die die zweite bistabile Schaltung (17) ein Signal an die elektronische Steuereinheit (15) ausgibt, um die Durchführung eines vordefinierten oder voreingestellten Programms des Haushaltsgeräts zu veranlassen, wobei das Haushaltsgerät zudem mindestens einen Steuerknoten (18) umfasst, der mit der zweiten bistabilen Schaltung (17) verbunden ist, wobei der Steuerknoten (18) so eingerichtet ist, dass er mindestens zwei Spannungspegel aufweist, wobei der zweite Schalter (S2) dazu eingerichtet ist, die Spannungspegel des Steuerknotens (18) umzuschalten, um das Signal an die elektronische Steuereinheit (15) zu übertragen.

2. Haushaltsgerät nach Anspruch 1, wobei die elektronische Steuereinheit (15) mindestens einen Mikrocontroller umfasst, der betriebsmäßig mit mindestens dem Steuerknoten (18) verbunden ist und dazu eingerichtet ist, die Ausführung des vordefinierten oder voreingestellten Programms abhängig von dem Signal zu starten.

3. Haushaltsgerät nach Anspruch 1 oder 2, welches zudem einen Resetknoten (19) umfasst, der mit der zweiten bistabilen Schaltung (17) verbunden ist, wobei der Resetknoten (19) mit dem Mikrocontroller (15) betriebsmäßig verbunden ist und dazu eingerichtet ist, von dem Mikrocontroller (15) ein Resetsignal zu empfangen, das angepasst ist, die zweite bistabile Schaltung (17) in einen Betriebszustand zurückzusetzen, der durch den zweiten Schalter (S2) umgeschaltet werden kann.

4. Haushaltsgerät nach einem der Ansprüche 1 bis 3, wobei die erste bistabile Schaltung (11) eine Mehrzahl von Transistoren (Q1, Q2) umfasst, die dazu eingerichtet sind, durch den Strom, der von einem Stromanschluss (13) gezogenen wird, polarisiert zu werden, wenn der Schalter (S1) schließt, um die Aktivierung eines Leistungstransistors (Q3, 12) zu verursachen, der dazu eingerichtet ist, der elektronischen Steuereinheit (15) Energie zuzuführen (13, 14).

5. Haushaltsgerät nach Anspruch 4, ferner umfassend eine Energieversorgung, die dazu eingerichtet ist, an ihrem Eingang eine Wechselstrom-Netzspannung zu erhalten und mindestens eine Gleichspannung auszugeben, die der elektronischen Steuereinheit (15) bereitgestellt wird, wobei der Leistungstransistor (Q3, 12) zwischen der Stromversorgung und der elektronischen Steuereinheit (15) angeordnet ist.

6. Haushaltsgerät nach einem der Ansprüche 1 bis 5, wobei die zweite bistabile Schaltung (17) eine zweite Mehrzahl von Transistoren (Q4, Q5) umfasst, die dazu eingerichtet sind, durch den Strom, der von einem Stromanschluss (13) gezogenen wird, polarisiert zu werden, wenn der zweite Schalter (S2) schließt, um die Aktivierung eines Leistungstransistors (Q3, 12) zu verursachen, der dazu eingerichtet ist, der elektronischen Steuereinheit (15) Energie zuzuführen (13, 14).

7. Haushaltsgerät nach einem der Ansprüche 1 bis 6, wobei der erste Schalter (S1) und der zweite Schalter (S2) entsprechend einer ersten Taste und einer zweiten Taste zugeordnet sind, die von einem Benutzer bedient werden können.

8. Haushaltsgerät nach einem der Ansprüche 1 bis 7, wobei das Haushaltsgerät (1) eine Waschmaschine ist, wobei das Signal, das dazu eingerichtet ist, den Betrieb der elektronischen Steuereinheit (15) zu starten, von Steuermitteln der Waschmaschine (1) zum Ausführen eines Behandlungszyklus erhalten wird.

9. Elektronisches System, das ein Haushaltsgerät nach einem der Ansprüche 1 bis 8 enthält.

## Revendications

1. Appareil électroménager comprenant une unité de commande électronique (15), un moyen de fourniture de puissance (12, 13, 14) pour ladite unité de commande électronique (15), un premier circuit bistable (11), et un premier commutateur (S1) connecté audit premier circuit bistable (11) et adapté pour commuter ledit premier circuit bistable (11) entre un premier mode de veille, dans lequel ladite unité de commande électronique (15) n'est pas alimentée, et un second mode de fonctionnement, dans lequel ladite unité de commande électronique (15) est alimentée pour se réveiller dudit premier mode de veille,
**caractérisé en ce que**
ledit appareil électroménager comprend en outre un second circuit bistable (17) connecté audit premier circuit bistable (11) et un second commutateur (S2) connecté audit second circuit bistable (17), ledit second commutateur (S2) étant adapté pour commuter ledit premier circuit bistable (11) en conséquence de la commutation dudit second circuit bistable (17) et étant également adapté pour commuter ledit second circuit bistable (17) de sorte que ledit second circuit bistable (17) fournisse en sortie un signal à ladite unité de commande électronique (15) pour provoquer l'exécution d'un programme prédéfini ou préétabli dudit appareil électroménager, dans lequel ledit appareil électroménager comprend en outre au moins un noeud de commande (18) connecté audit second circuit bistable (17), ledit noeud de commande (18) étant adapté pour avoir au moins deux niveaux de tension, dans lequel ledit second commutateur (S2) est adapté pour commuter les niveaux de tension dudit noeud de commande (18) pour fournir ledit signal à ladite unité de commande électronique (15).

2. Appareil électroménager selon la revendication 1, dans lequel ladite unité de commande électronique (15) comprend au moins un microcontrôleur connecté opérationnellement audit au moins un noeud de commande (18) et adapté pour démarrer l'exécution dudit programme prédéfini ou préétabli selon ledit signal.

3. Appareil électroménager selon la revendication 1 ou 2, comprenant en outre un noeud de réinitialisation (19) connecté audit second circuit bistable (17), ledit noeud de réinitialisation (19) étant connecté opérationnellement audit microcontrôleur (15) et étant adapté pour recevoir en provenance dudit microcontrôleur (15) un signal de réinitialisation adapté pour réinitialiser ledit second circuit bistable (17) à un état de fonctionnement qui peut être commuté par ledit second commutateur (S2).

4. Appareil électroménager selon l'une quelconque des revendications 1 à 3, dans lequel ledit premier circuit bistable (11) comprend une pluralité de transistors (Q1, Q2) adaptés pour être polarisés par le courant tiré d'une borne de puissance (13) lorsque ledit premier commutateur (S1) se ferme, de façon à provoquer l'activation d'un transistor de puissance (Q3, 12) adapté pour fournir une puissance (13, 14) à ladite unité de commande électronique (15).

5. Appareil électroménager selon la revendication 4, comprenant en outre un bloc de fourniture de puissance adapté pour recevoir à son entrée une tension alternative de secteur et pour fournir en sortie au moins une tension continue à fournir à ladite unité de commande électronique (15), dans lequel ledit transistor de puissance (Q3, 12) est intercalé entre ledit bloc de fourniture de puissance et ladite unité de commande électronique (15).

6. Appareil électroménager selon l'une quelconque des revendications 1 à 5, dans lequel ledit second circuit bistable (17) comprend une seconde pluralité de transistors (Q4, Q5) adaptés pour être polarisés par le courant tiré d'une borne de puissance (13) lorsque ledit second commutateur (S2) se ferme, de façon à provoquer l'activation d'un transistor de puissance (Q3, 12) adapté pour fournir une puissance (13, 14) à ladite unité de commande électronique (15).

7. Appareil électroménager selon l'une quelconque des revendications 1 à 6, dans lequel ledit premier commutateur (S1) et ledit second commutateur (S2) sont associés respectivement à un premier bouton et un second bouton qui peuvent être actionnés par un utilisateur.

8. Appareil électroménager selon l'une quelconque des revendications 1 à 7, ledit appareil électroménager (1) étant une machine à laver, dans lequel ledit signal adapté pour démarrer le fonctionnement de ladite unité de commande électronique (15) est reçu en provenance d'un moyen de commande de ladite machine à laver (1) pour exécuter un cycle de traitement.

9. Système électronique comportant un appareil électroménager, selon l'une quelconque des revendications 1 à 8.
